# EUROPÄISCHE PATENTSCHRIFT

(11) **EP 0 895 530 B1**
(45) Veröffentlichungstag und Bekanntmachung des Hinweises auf die Patenterteilung: **12.11.2003**
(21) Anmeldenummer: 97914298.1
(22) Anmeldetag: 24.03.1997
(51) Int. Cl.: C09D 167/02, C09D 171/00, C08F 2/46

(54) **BINDEMITTEL SOWIE DEREN VERWENDUNG IN STRAHLENHÄRTBAREN BESCHICHTUNGSMITTELN**
BINDER AND ITS USE IN RADIATION-CURABLE COATING AGENTS
LIANT ET SON UTILISATION DANS LES REVETEMENTS DURCISSABLES PAR RAYONNEMENT

(30) Priorität: 27.04.1996 DE 19616984
(43) Veröffentlichungstag der Anmeldung: 10.02.1999
(73) Patentinhaber: BASF Coatings AG, 48165 Münster (DE)
(72) Erfinder: KRANIG, Wolfgang, D-48308 Senden (DE); BLUM, Rainer, D-67069 Ludwigshafen (DE)
(74) Vertreter: Fitzner, Uwe, Dr.
(86) Internationale Anmeldenummer: EP9701484
(87) Internationale Veröffentlichungsnummer: WO97041184

(56) Entgegenhaltungen:
- US-A- 4 022 674
- US-A- 4 100 047

## Beschreibung

### Gebiet der Erfindung

Die vorliegende Erfindung betrifft Bindemittel auf der Basis von aminmodifizierten Polyetherund/oder Polyesteracrylaten, die Einheiten der Benzophenontetracarbonsäure, deren Anhydride und/oder deren Ester als polymere Photoinitiatorbestandteile enthalten, sowie die Verwendung der Bindemittel in strahlenhärtbaren Beschichtungsmitteln.

### Stand der Technik

Es ist bekannt, Lacke auf der Basis von Acrylsäureestern durch Strahlung, insbesondere durch UV-Strahlung, zu härten. Hier tritt jedoch das Problem auf, daß bei der Aushärtung des Lacks das Vorhandensein von Luft stört.

Aus der DE-PS 26 25 538 sind photopolymerisierbare Überzugsmassen bekannt, die als Reduktionsmittel bzw. kettenübertragende Verbindungen Amine enthalten.

Durch Einbau der Aminogruppe in ein Molekül, das noch polymerisationsfähige Gruppen enthält, wird ein bei der Härtung einpolymerisiertes Amin erhalten.
Eine bekannte Methode des Einbaus ist die Addition von Aminen an doppelbindungsreiche Moleküle, die analog einer Michael-Addition verläuft und die beispielsweise in F. Möller, Houben-Weyl, Bd. 11/1 (1957), Seiten 277 bis 280, beschrieben ist. Die US-PS 2,759,913 lehrt die Anlagerung von Aminen an aktivierte, olefinisch ungesättigte Verbindungen, wie Acrylate, in äquimolaren Mengen, die zur vollständigen Umsetzung der aktivierten ethylenischen Doppelbindungen führt. Systematische Untersuchungen über die Anlagerung von Aminoalkoholen an Acrylate wurden von N. Ogata und T. Asahara, Bull. Chem. Soc. Jap. 39, Seiten 1486 bis 1490, 1966, durchgeführt.

In der DE-PS 23 46 424 wird die Herstellung von strahlungshärtbaren Massen, ausgehend von Acrylsäureestern mehrwertiger Alkohole und sekundären, aliphatischen monofunktionellen Aminen, beschrieben.

Aus den US-Patentschriften 4,547,562 und 4,675,374 sind strahlenhärtbare lösungsmittelfreie Zusammensetzungen auf Basis von Polyacrylaten und Mono-, Di- oder Polyaminen bekannt. Als geeignete Di- und Polyamine werden Spezies mit mehr als einer primären Aminogruppe genannt. Bei verwendung dieser Polyamine werden hochvernetzte, höhermolekulare und damit höherviskose Überzugsmassen erhalten, die ohne Zusatz von Reaktivverdünnern und Lösungsmitteln eine zu hohe Applikationsviskosität aufweisen oder sogar zu festen Produkten führen.

Die US-PS 4,045,416 und US-PS 3,845,056 schließlich betreffen strahlenhärtbare Überzugsmittel auf Basis von Aminacrylaten, welche erhalten werden durch Umsetzung von Polyacrylaten mit Aminen mit mindestens einem Amin-Wasserstoff. Als geeignete Amine werden primäre und sekundäre Monoamine sowie Polyamine genannt. Gemäß den US-Patenten werden als Polyaminkomponenten Polyamine mit mehr als einer primären Aminogruppe, Polyamine mit ausschließlich sekundären Aminogruppen oder Polyamine mit sekundären und tertiären Aminogruppen genannt.

Beschichtungsmittel gemäß der noch nicht veröffentlichten deutsche Patentanmeldung 195 45 123.6 sind ohne Verwendung externer Synergisten, z.B. Amine, strahlenhärtbar. Die in der noch nicht veröffentlichten deutschen Patentanmeldung 195 45 123.6 beschriebenen Beschichtungsmittel enthalten niedrigviskose Oligomere mit vergleichsweise guter Strahlenhärtbarkeit und führen zu vergleichsweise guten Eigenschaften beim Lackfilm, insbesondere bei der Härte des Lackfilms. Die Beschichtungsmittel weisen eine niedrige Viskosität auf, so daß auf die Verwendung von Reaktivverdünnern und organischen Lösungsmitteln verzichtet werden kann. Weiterhin weisen die mit solchen Beschichtungsmitteln hergestellten Beschichtungen eine gute Schleifbarkeit bei guter Haftung selbst auf kritischen Untergrunden auf.

Nachteilig für den Einsatz aller Beschichtungsmittel des Standes der Technik in UV-härtbaren Systemen ist die Anwesenheit niedermolekularer UV-Initiatoren. Solche niedermolekularen UV-Initiatoren führen bei der UV-Härtung der Beschichtungsmittel zu Bruchstücken, die einerseits aufgrund des relativ hohen Anteils an UV-Initiatoren im Beschichtungsmittel zu nennenswerten Masseverlusten im Beschichtungsmittel und damit bei der resultierenden Beschichtung führen und andererseits, bedingt durch die hohe Flüchtigkeit der Initiatorbruchstücke, zu unerwünschten, stark riechenden und oftmals toxischen Emissionen bei der Aushärtung der Beschichtungsmittel führen.

Aus dem Stand der Technik sind einpolymerisierbare UV-Initiatoren bekannt, mit denen das Auftreten niedermolekularer Initiatorbruchstücke verhindert werden kann. In die Klasse solcher einpolymerisierbarer UV-Initiatoren ist auch die Benzophenontetracarbonsäure, deren Dianhydrid und deren Ester einzuordnen, wie sie beispielsweise für hitzebeständige Photoresistmaterialien eingesetzt werden, wie z.B. in EP-A-0 379 377 beschrieben.

Die US-PS 4,100,047 umfaßt wäßrige, UV-härtbare Beschichtungsmittel, enthaltend ein hydroxyfunktionelles ethylenisch ungesättigtes Polymerisat, beispielsweise einen Ether aus Polyethylenglykol und Hydroxyethylacrylat, Benzophenontetracarbonsäuredianhydrid als Photoinitiator, der an das hydroxyfunktionelle ethylenisch ungesättigte Polymerisat gebunden ist, sowie einen weiteren niedermolekularen Photoinitiator. Die mit Beschichtungsmitteln gemäß US-PS 4,100,047 hergestellten Beschichtungen können mit in Luft bei 2200W/inch Bestrahlungsintensität mit Bandgeschwindigkeiten von ca. 3 m/min ausgehärtet werden. Nachteilig bei den Beschichtungsmitteln gemäß US-PS 4,100,047 sind die hohen notwendigen Bestrahlungsintensitäten bei vergleichsweise geringen Aushärtgeschwindigkeiten.

In US-PS 4,216,306 werden Beschichtungsmittel beansprucht, die ein polymeres Addukt aus Diglycidylether, Acrylsäure und Benzophenontetracarbonsäuredianhydrid sowie einen niedermolekularen Photoinitiator enthalten. Auch hier ist das Auftreten niedrigmolekularer flüchtiger Bruchstücke, die aus dem Initiatorzerfall herrühren, von Nachteil. Weiterhin müssen Beschichtungen, die mit Beschichtungsmitteln gemäß US-PS 4,216,306 hergestellt werden, bei Bandgeschwindigkeiten von ca. 10 m/min in 3 Durchläufen gehärtet werden, was wiederum auf eine vergleichsweise geringe Aushärtegeschwindigkeit hindeutet.

US-PS 4,338,171 beschreibt schließlich Beschichtungsmittel, bestehend aus Gemischen aus monomeren ethylenisch ungesättigten Verbindungen, beispielsweise Trimethylyolpropantriacrylat, und Benzophenontetracarbonsäuredi- oder tetraester als Photoinitiatoren, die zwar hochreaktiv sind und bei Bandgeschwindigkeiten von ca. 30 m/min ausgehärtet werden können, die aber die hohe Flüchtigkeit der monomeren, den überwiegenden Anteil des Beschichtungsmittels ausmachenden Komponente und den notwendig hohen Anteil an Photoinitiator zum Nachteil haben.

### Aufgabe und Lösung

Aufgabe der vorliegenden Erfindung war es daher, Bindemittel für Beschichtungsmittel bereitzustellen, die einerseits die aus der noch nicht veröffentlichten deutschen Patentanmeldung 195 45 123.6 bekannten Vorteile der dort beschriebenen Beschichtungsmittel, wie ausreichende Lagerstabilität, Homogenität, Abwesenheit von Reaktivverdünnern und die guten Eigenschaften bei Lackfilmen aus den Beschichtungsmitteln, wie insbesondere die Härte des Lackfilms, andererseits mit einer hohen Aushärtegeschwindigkeit und der Vermeidung des Freiwerdens flüchtiger Bestandteile bei der Aushärtung der Beschichtungsmittel kombinieren.

Die der vorliegenden Erfindung zugrundeliegende Aufgabe wird gelöst durch ein strahlenhärtbares Bindemittel BM, bestehend aus einem Copolymerisat aus 80 bis 99 Gew.-%, vorzugsweise 85 bis 98 Gew.-%, eines hydroxylgruppenhaltigen Polyetheracrylats und/oder Polyesteracrylat das ein Mono-, Di- und/oder Polyamin als Addukt AA) als Komponente A) enthält, sowie aus 1 bis 20 Gew.-%, vorzugsweise 2 bis 15 Gew.-% Benzophenontetracarbonsäure, deren Anhydride und/oder deren Ester als Komponente B), sowie durch das Bindemittel BM enthaltende strahlenhärtbare Beschichtungsmittel.

Solche strahlenhärtbare Beschichtungsmittel enthalten bevorzugt:

| | |
|---|---|
| 20 bis 100 Gew.-%, | vorzugsweise 30 bis 80 Gew.-%, des erfindungsgemäßen Bindemittels BM, gegebenenfalls im Gemisch mit weiterem photopolymerisierbarem, polymerem Bindemittel, |
| 0 bis 40 Gew.-%, | vorzugsweise 0 bis 30 Gew.-%, Wasser als Komponente C), |
| 0 bis 50 Gew.-%, | vorzugsweise 0 bis 30 Gew.-% Füllstoffe als Komponente D), |
| 0 bis 10 Gew.-%, | vorzugsweise 0,5 bis 10 Gew.-%, weiteres Mono-, Di- und/oder Polyamin AA) als Komponente E), |
| 0 bis 20 Gew.-%, | vorzugsweise 0 bis 10 Gew.-%, niedermolekulare, copolymerisierbare Verbindungen als Komponente F), sowie |
| 0 bis 30 Gew.-%, | vorzugsweise 0 bis 20 Gew.-% übliche Hilfs- und Zusatzstoffe als Komponente G), |

wobei die Summe der Anteile des Bindemittels BM und der Komponenten C) bis G) 100 Gew.-% des Beschichtungsmittels ausmacht.

In weiteren bevorzugten Ausführungsformen der Erfindung ist die Komponente A) ein Polyetheracrylat-Addukt und/oder Polyesteracrylat-Addukt mit mindestens zwei Acrylsäureund/oder Methacrylsäureestergruppen pro Molekül und sind die anwesenden Mono-, Di- und/oder Polyaminen AA) bevorzugt Diamine mit einer primären und einer tertiären Aminogruppe, wobei ganz besonders bevorzugt das Verhältnis von primären Aminogruppen der Mono-, Di- und/oder Polyamine AA) zu (meth)acrylischen Doppelbindungen des Polyetheracrylats A) 0,01 : 1 bis 0,2 : 1, vorzugsweise 0,03 : 1 bis 0,1 ; 1, beträgt.

### Durchführung der Erfindung

In einer bervorzugten Form der Erfindung weisen die Polyether(math)acrylate und/oder die Polyester(meth)acrylate mindestens zwei Acrylsäureesterund/oder Methacrylsäureestergruppen pro Molekül auf.

Erfindungsgemäß besonders bevorzugt eingesetzt werden für die Komponente A) hydroxylgruppenhaltige Polyetheracrylate und/oder Polyethermethacrylate, wie sie insbesondere in der noch nicht veröffentlichten deutschen Patentanmeldung P 195 35 936.4 beschrieben sind. Geeignete Acrylsäure- bzw. Methacrylsäureester für die Komponente A) werden beispielsweise aufgebaut mit zweiwertigen aliphatischen Alkoholen, wie Ethylenglykol, Propylenglykol-1,2 und -1,3, Butandiol-1,4, Pentandiol-1,2, Neopentylglykol, Hexandiol-1,6, 2-Methylpentandiol-1,5, 2-Ethylbutandiol-1,4, Dimethylolcyclohexan und Diethylenglykol, mit dreiwertigen Alkoholen, wie Glycerin, Trimethylolethan, Trimethylolpropan und Trimethylolbutan, mit vierwertigen Alkoholen, wie Pentaerythrit, sowie mit höherwertigen Alkoholen, wie Di(trimethylolpropan), Di(pentaerythrit) und Sorbitol.
Weiterhin sind cycloaliphatische Alkohole, wie cyclohexandiole und 1,4-Bis-(hydroxymethyl)cyclohexan, araliphatische Alkohole, wie 1,3-Xylylendiol, sowie Phenole wie 2,2-Bis-(4-hydroxyphenyl)propan (Bisphenol-A) geeignet.
Die hydroxylgruppenhaltigen Polyether der Komponente A), die mit Acrylsäure und/oder Methacrylsäure verestert werden, werden durch Umsetzung von den oben angeführten zweiund/oder mehrwertigen Alkoholen mit verschiedenen Mengen an Ethylenoxid und/oder Propylenoxid nach gut bekannten Methoden (vgl. z.B. Houben-Weyl, Band XIV, 2, Makromolekulare Stoffe II, (1963)) erhalten.

Besonders bevorzugt werden Polyetheracrylate für die Komponente A), die aus (Meth)acrylsäure und einem propoxyliertem Trimethylolpropan-Polyol hergestellt sind.
Weiterhin können auch Polymerisationsprodukte des Tetrahydrofurans oder Butylenoxids eingesetzt werden.

Für die Komponente A) kommen auch hydroxylgruppenhaltige Polyesteracrylate und/oder Polyestermethacrylate in Frage. Zur Herstellung der Polyester(meth)acrylate A) werden als mehrwertige Alkohole hydroxylgruppenhaltige Polyester (Polyesterpolyole) eingesetzt. Diese können durch Veresterung von Dicarbonsäuren mit Diolen und Triolen nach gut bekannten Methoden (vgl. z.B. P.J. Flory, J. Am. Chem. Soc. 58, 1877 (1936) und J. Am. Chem. Soc. 63, 3083 (1953)) hergestellt werden.
Die Herstellung von hydroxylgruppenhaltigen Polyetheracrylaten und Polyesteracrylaten A) ist beispielsweise auch beschrieben in der DE-A-38 36 370.

Die Mono-, Di- und/oder Polyamine AA) weisen bevorzugt eine primäre Aminogruppe auf, wie beispielsweise aliphatische oder cycloaliphatische Mono-, Di- und/oder Polyamine, z.B. Monoalkylamine, Monoalkanolamine, N,N-Dialkylalkylendiamine oder N,N-Dialkyldialkylentriamine.
Besonders bevorzugt besitzen die Diamine AA) eine primäre und eine tertiäre Aminogruppe, wobei vorzugsweise das Verhältnis von primären Aminogruppen zu (meth)acrylischen Doppelbindungen zwischen 0,01:1 und 0,2:1, ganz besonders bevorzugt zwischen 0,03:1 und 0,1:1 liegt.
Als Diamine AA) mit einer primären und einer tertiären Aminogruppe eignen sich bevorzugt N,N-Dialkyl-diaminoalkane, wie besonders bevorzugt N,N-Dimethyl-1,3-diaminopropan, welches durch katalytische Hydrierung von Dimethylaminopropionitril erhältlich ist. Die Herstellung dieses Diamins AA) ist beispielsweise beschrieben in Houben-Weyl, Bd 11/1, 1957, Seite 565, in der EP-A-0 316 761 oder in P. Lappe, H. Springer und J. Weber, Chem.-Ztg. 111(4), Seiten 117 bis 125 (1987).
Weitere geeignete Dialkylaminopropane AA) sind N,N-Diethyl-1,3-diaminopropan, N,N-Di-n-propyl-1,3-diaminopropan, 4-Morpholinopropylamin, 3(N-Piperidinyl)propylamin oder N, N-Diphenyl-1,3-diaminopropan. Als Komponente AA) der erfindungsgemäßen Additionsprodukte kommen weiterhin in Frage: N,N-Dialkyl-1,2-diaminoethane, wie Dimethylaminoethylamin, Diethylaminoethylamin, N-β-Aminoethylmorpholin (Herstellung siehe z.B. Houben Weyl, Bd. 11/1, 1957, Seite 563), N,N-Dialkyl-1,5-diaminopentane, die herstellbar sind durch 1,4-Addition von sekundären Aminen an 1-Cyanbutadien-1,3 unter Bildung der Nitrile und anschließender katalytischer Hydrierung (Herstellung siehe Houben-Weyl, Bd. 11/1, 1957, S. 276). Beispiele für geeignete N,N-Dialkyl-1,5-diaminopentane sind: Dimethylaminopentylamin, Diethylaminopentylamin, 4-Morpholinpentylamin. Besonders gute Ergebnisse werden erzielt, wenn als Aminkomponente AA) N,N-Dimethyl-1,3-diaminopropan verwendet wird.

Das Aminaddukt des Polyetheracrylat und/oder des Polyesteracrylats wird hergestellt, indem an einen Acrylsäureester oder Methacrylsäureester der Komponente A) oder an ein Gemisch dieser Ester der Komponente A) in einer Michael-Reaktion die Mono-, Di- und/oder Polyamine AA) addiert werden. Die solchermaßen erhaltenen aminmodifizierten (Meth)acrylsäureester der Komponente A) enthalten noch nicht umgesetzte Acrylester- und/oder Methacrylsäureestergruppen sowie tertiäre Aminogruppen.
Die Additions-Reaktion wird in flüssiger Phase bei mäßiger Temperatur in Abwesenheit eines Katalysators, durchgeführt. Das Mono, Di- und/oder Polyamin AA) wird in entsprechender Menge dem Ester der Komponente A) unter Rühren bei Raumtemperatur zugesetzt. Die Temperatur kann dabei auf etwa 40 Grad C ansteigen. Durch Erhöhung der Temperatur kann die Reaktion beschleunigt werden, bei 60 Grad C ist sie nach etwa 12 Stunden abgeklungen. Die Viskosität der erhaltenen Mischung ist dann zeitlich konstant.
Wegen der Reproduzierbarkeit sollte die Reaktion möglichst vollständig ablaufen, was bei Reaktionstemperaturen über 40 Grad C erreicht wird.
Die Umsetzung wird im allgemeinen ohne Lösungsmittel durchgeführt, aber es können auch Lösungsmittel angewandt werden, insbesondere um feste Amine als Lösung zuzudosieren. Das Lösungsmittel wird dann nach erfolgter Michael-Addition entfernt.
Damit bei der Additionsreaktion keine unerwünschte Polymerisation stattfindet, werden dem Reaktionsgemisch im allgemeinen Polymerisationsinhibitoren zugesetzt. zu den geeigneten Polymerisationsinhibitoren gehören an sich bekannte Produkte, wie beispielsweise substituierte Phenole, wie 2,6-Di-tert.-butyl-p-kresol, Hydrochinone, wie Methylhydrochinone, und Thioether, wie Thiodiglykol oder Phenothiazin.

Als Comonomerbestandteil B) des erfindungsgemäßen Bindemittels BM wird Benzophenontetracarbonsäure, deren Anhdride und/oder deren Ester eingesetzt. Die Komponente B) reagiert bei der Umsetzung mit den freien Hydroxylgruppen der Komponente A) unter Ausbildung der entsprechenden Ester der Benzophenontetracarbonsäure. Gegebenenfalls werden an sich übliche Veresterungskatalysatoren zugesetzt.
Bei der Strahlenhärtung der das Bindemittel BM enthaltenden Beschichtungsmittel wirken die Benzophenongruppen in an sich bekannter Weise als Photoinitiatoren ohne daß ein Zusatz weiterer niedermolekularer Photoinitiatoren notwendig wird.
Neben der schon genannten Benzophenontetracarbonsäure seien beispielhaft für die Komponente B) angeführt: Benzophenontetracarbonsäuremonoester, wie Benzophenontetracarbonsäuremonalkylester, Benzophenontetracarbonsäurediester, wie Benzophenontetracarbonsäuredialkylester, Benzophenontetracarbonsäuretriester, wie Benzophenontetracarbonsäuretrialkylester, Benzophenontetracarbonsäuretetraester, wie Benzophenontetracarbonsäuretetraalkylester, Benzophenonetracarbonsäuremonoanhydrid, dessen verbleibende Carbonsäuregruppen gegebenenfalls teilweise oder vollständig verestert sind, sowie bevorzugt Benzophenontetracarbonsäuredianhydrid.

In einer bevorzugten Ausführungsform der Erfindung wird das Bindemittel BM in einem mehrstufigen Verfahren hergestellt, umfassend folgende Stufen :
I. die Umsetzung des Polyether(meth)acrylats und/oder des Polyester(meth)acrylats der Komponente A) mit dem Mono-, Di- und/oder Polyamin AA) in der schon beschriebenen Additionsreaktion,
II. die Umsetzung des gemäß Stufe I. hergestellten Additionsprodukts mit der Komponente B) durch Veresterung der Komponente B) mit den freien Hydroxylgruppen der Komponente A) bei für die Veresterung üblichen Reaktionstemperaturen, gegebenenfalls unter Verwendung an sich üblicher Veresterungskatalysatoren, und gegebenenfalls
III. die abschließende Umsetzung des gemäß Stufe II. hergestellten Bindemittels mit weiterem Mono-, Diund/oder Polyamin AA) als Komponente E) zur Einstellung der Reaktivität und Viskosität des Beschichtungsmittels, wobei wiederum die schon angeführten, für die Additionsreaktion relevanten Reaktionsbedingungen herrschen.

In einer weiteren Ausführungsform der Erfindung wird das Bindemittel BM in einem mehrstufigen Verfahren hergestellt, umfassend folgende Stufen:
I. die Umsetzung der Komponente A) mit der Komponente B) durch Veresterung der Komponente B) mit den freien Hydroxylgruppen der Komponente A) bei für die Veresterung üblichen Reaktionstemperaturen und gegebenenfalls unter Verwendung an sich üblicher Veresterungskatalysatoren und
II. die abschließende Umsetzung des gemäß Stufe I. hergestellten Bindemittels mit dem Mono-, Diund/oder Polyamin AA) als Komponente E) zur Adduktbildung und zur Einstellung der Reaktivität und Viskosität des Beschichtungsmittels, wobei die für die Additionsreaktion relevanten Reaktionsbedingungen herrschen.

In beiden Verfahrensvarianten kann die Viskosität und Reaktivität durch einfache Zugabe des Mono-, Diund/oder Polyamins AA) als Komponente E) vor der Applikation in gewissen Grenzen eingestellt werden. Vergehen zwischen der Zugabe der Komponente E) und der Applikation der Überzugsmasse ca. 48 Stunden, ist das Amin nicht mehr in freier Form vorhanden, sondern an die übrigen Bestandteile der Überzugsmasse chemisch oder physikalisch gebunden. Dabei steigt die Reaktivität des unter Aminzugabe entstandenen Gemisches gegenüber der oben beschriebenen Basisformulierung. Versuche haben ergeben, daß je nach Menge unter UV-Strahlung eine annähernd verdoppelte Reaktionsgeschwindigkeit zu verzeichnen ist. Die Viskosität läßt sich ebenso nahezu verdoppeln.
Bevorzugt wird die Komponente E) in Mengen von 0,5 bis 10 Gew.-%, besonders bevorzugt in Mengen von 1 bis 5 Gew.-%, bezogen auf das Beschichtungsmittel, zugesetzt.

Die erfindungsgemäßen Bindemittel BM sind bei Raumtemperatur flüssig und werden als filmbildende Komponenten in den erfindungsgemäßen strahlenhärtbaren Beschichtungsmitteln verwendet.
Der Vorteil der erfindungsgemäß bevorzugten Bindemittel BM ist auch insbesondere darin zu sehen, daß bedingt durch die in ihnen enthaltenen oder im wäßrigen Medium gebildeten freien Säuregruppen der Komponente B) die Bindemittel BM in Wasser dispergierbar sind oder nach Neutralisation der freien Säuregruppen mit der Aminkomponente AA) gegebenenfalls sogar löslich sind, so daß auf die Verwendung von organischen Lösungsmitteln in den erfindungsgemäßen Beschichtungsmitteln vollständig verzichtet werden kann.

Die strahlenhärtbaren Beschichtungsmittel können neben den erfindungsgemäßen Bindemitteln BM auch andere in strahlenhärtbaren Lacken übliche Bindemittel enthalten. Bevorzugt können die erfindungsgemäßen strahlenhärtbaren Beschichtungsmittel neben den Bindemitteln BM noch weitere photopolymerisierbare Bindemittel, welche ebenfalls aminmodifiziert sein können, in Anteilen von bis zu 50 Gew.-%, bezogen auf das Bindemittel BM, enthalten.
Als weitere aminmodifizierte Bindemittel kommen z.B. die aus der EP-A-0 280 222 und die aus den US-Patentschriften Nr. 4,045,416, 4,547,562 und 4,675,374 bekannten strahlenhärtbaren Bindemittel in Frage.
Als nicht-aminmodifizierte weitere photopolymerisierbare Bindemittel kommen die als Beispiel für die Komponente A) zuvor beschriebenen Polyetheracrylate, Polyethermethacrylate, Polyesteracrylate oder Polyestermethacrylate,sowie desweiteren Urethanacrylate, Urethanmethacrylate, Epoxidacrylate und Epoxidmethacrylate in Frage, wobei die letztgenannten Urethan(meth)acrylate und Epoxid(meth)acrylate ebenfalls die erfindungsgemäße Komponente B) als Polymerbestandteil enthalten können.

Als Füllstoffe-Komponente D) kommen in den erfindungsgemäßen Beschichtungsmitteln Silikate, wie insbesondere Kaoline, Talkum, Kieselkreide, Glimmer, z.B. Eisenglimmer, Siliziumcarbeet und Quarzmehl, Carbonate, wie beispielsweise Calciumcarbonate und Calcium-Magnesium-Carbonate (Dolomit) und Sulfate, wie beispielsweise Bariumsulfate (Schwerspat) oder Kaliumsulfate (Leichtspat), in Betracht. Neben den genannten Stoffen können auch Holzmehl und Cellulose-Derivate als Füllstoffe D) verwendet werden.
Als Füllstoffe D) kommen auch farbgebende Stoffe in Betracht. Hierzu zählen sowohl anorganische, z.B. Ruß, TiO₂ als auch organische Pigmente.
Die Füllstoffgehalte der erfindungsgemäßen Beschichtungsmittel können 0 bis 50 Gew.-%, vorzugsweise 0 bis 30 Gew.-%, bezogen auf das Beschichtungsmittel betragen. Es ist dabei überraschend, daß es in einem Bereich von mehr als 15 Gew.-% Füllstoffanteil zu keinen Haftungsverlusten kommt. Darüber hinaus weisen die erfindungsgemäßen Beschichtungsmittel keinerlei irreversible Absetzneigung auf.

In untergeordneten Mengen von 0 bis 20 Gew.-%, vorzugsweise von 0 bis 10 Gew.-%, bezogen auf das Beschichtungsmittel, können als Komponente P) im Beschichtungsmittel je nach Viskosität der Ester der Komponente A) weiter, für den Einsatz in strahlenhärtbaren Überzugsmitteln bekannte niedermolekulare copolymerisierbare Verbindungen enthalten sein, wie beispielsweise (Meth)acrylsäureester, insbesondere Methyl(meth)acrylat, Ethyl(meth)acrylat, Propyl(meth)acrylat, Butyl(meth)acrylat, Isopropyl(meth)acrylat, Isobutyl(meth)acrylat, Pentyl(meth)acrylat, Isoamyl(meth)acrylat, Hexyl(meth)acrylat, Cyclohexyl(meth)acrylat, 2-Ethylhexyl(meth)acrylat, Octyl(meth)acrylat, 3,5,5-Trimethylhexyl(meth)acrylat, Decyl(meth)acrylat, Dodecyl(meth)acrylat, Hexadecyl(meth)acrylat, Octadecyl(meth)acrylat, Octadecenyl(meth)acrylat sowie die entsprechenden Ester der Malein-, Fumar-, Tetrahydrophthal-, Croton-, Isocroton-, Vinylessig- und Itaconsäure. Bevorzugt eingesetzt werden Monomere mit mehr als einer Doppelbindung pro Molekül, wie z.B. Ethylenglykoldiacrylat, Diethylenglykoldiacrylat, Propylenglykoldiacrylat, Trimethylenglykoldiacrylat, Neopentylglykoldiacrylat, 1,3-Butylenglykoldiacrylat, 1,4-Butylenglykoldiacrylat, 1,6-Hexamethylenglykoldiacrylat, 1,10-Decamethylenglykol-diacrylat, Trimethylolpropantriacrylat, Pentaerythrittetraacrylat und Pentaerythrittriacrylat sowie die entsprechenden Methacrylate. Ganz besonders bevorzugt eingesetzt werden Trimethylolpropantriacrylat und Acrylsäureester von propoxyliertem Trimethylolpropan.
Der Zusatz dieser monomeren, copolymerisierbaren Verbindungen (oft auch Reaktivverdünner genannt) ist aber im allgemeinen nicht erforderlich, da die erfindungsgemäßen Bindemittel BM ausreichend niedrigviskose Beschichtungsmittel auch ohne diese Reaktivverdünner zulassen.

Die erfindungsgemäßen strahlenhärtbaren Beschichtungsmittel enthalten als Komponente G) in Mengen von 0 bis 30 Gew-%, vorzugsweise 0 bis 20 Gew.-%, bezogen auf das Beschichtungsmittel, an sich übliche Hilfs- und Zusatzstoffe, wie z.B. Extender, Entschäumer, Verlaufsmittel und filmbildende Hilfsmittel, Gleitmittel oder Haftvermittler.
Die Gleitmittel können beispielsweise mit einem Anteil von 0,8 bis 1,2 Gew.-% und die Verlaufsmittel mit einem Anteil von 0,2 bis 0,8 Gew.-% im Beschichtungsmittel vorhanden sein.

In einer bevorzugten Ausführungsform der Erfindung ist das Beschichtungsmittel also aufgebaut aus:

| | |
|---|---|
| 20 bis 100 Gew.-%, | vorzugsweise 30 bis 80 Gew.-%, des erfindungsgemäßen Bindemittels BM, gegebenenfalls im Gemisch mit weiterem photopolymerisierbarem, polymerem Bindemittel, |
| 0 bis 40 Gew.-%, | vorzugsweise 0 bis 30 Gew.-%, Wasser als Komponente C), |
| 0 bis 50 Gew.-%, | vorzugsweise 0 bis 30 Gew.-% der Komponente D), |
| 0 bis 10 Gew.-%, | vorzugsweise 0,5 bis 10 Gew.-%, weiteres Mono-, Di- und/oder Polyamin als Komponente E), |
| 0 bis 20 Gew.-%, | vorzugsweise 0 bis 10 Gew.-%, der Komponente F), sowie |
| 0 bis 30 Gew.-%, | vorzugsweise 0 bis 20 Gew.-% der Komponente G), |

wobei die Summe der Anteile des Bindemittels BM und der Komponenten C) bis G) 100 Gew.-% des Beschichtungsmittels ausmacht.

Vorteilhafte Eigenschaften der Beschichtungsmittel sind die gute Schleifbarkeit und sehr gute Haftung selbst auf kritischen Untergrunden, wie z.B. mit Melaminharzen beschichteten Holzwerkstoffen oder Kunststoffen, ohne daß der Einsatz typischer Haftvermittler notwendig wird. Im Einzelfall können jedoch zusätzliche Haftvermittler eingesetzt werden. Beispiele sind Alkoxysilane, wie beispielsweise N-β-Aminoethyltrimethoxysilan, N-Methyl-β-aminopropyltrimethoxysilan oder triaminomodifiziertes Propyltrimethoxysilan (z.B. Haftvermittler DYNASLYAN ^{R}, Typ TRIAMO, Handelsprodukt der Dynamit Nobel Chemie).

Die Härtung der Lackfilme erfolgt direkt nach dem Auftragen oder nach dem Verdunsten des gegebenenfalls anwesenden Wassers mittels UV- oder Elektronenstrahlen. Die Anlagen und Bedingungen für diese Härtungsmethoden sind aus der Literatur bekannt (vgl. z.B. R. Holmes, U.V. and E.B. Curing Formulations for Printing Inks, Coatings and Paints, SITA-Technology, Academic Press, London, United Kingdom 1984, S. 79 bis 111) und bedürfen keiner weiteren Beschreibung.

Die Überzugsmittel können durch Spritzen, Walzen, Fluten, Tauchen, Rakeln, Streichen, Gießen oder durch Vakumat-Applikation auf das Substrat, vorzugsweise auf Holz, auf Holzwerkstoffe oder auf Papier, aufgebracht werden.

Die erfindungsgemäßen strahlenhärtbaren Beschichtungsmittel weisen eine ausgezeichnete Lagerstabilität auf, haben ein transparentes Aussehen, eine gute Strahlenhärtbarkeit, und führen nach der Strahlenhärtung zu Filmen mit ausgezeichneten Eigenschaften. Die erhaltenen Filme zeichnen sich durch eine ausgezeichnete Transparenz aus, wenn keine Füllstoffe im Beschichtungsmittel anwesend sind.

Nachfolgend wird die Erfindung anhand von Ausführungsbeispielen näher erläutert. Teile bedeuten Gewichtsteile, sofern nichts anderes angegeben wird.

### Beispiele

### Beispiel 1: Herstellung des Bindemittels BM1 und eines Beschichtungsmittels

In 90,0 Teile eines Polyetheracrylats, hergestellt aus propoxyliertem Trimethylolpropan (Polyol PP150 R der Fa. Perstorp) werden während 1 Stunde bei 60 Grad C 2,0 Teile 3-Dimethylaminopropylamin zur Herstellung der Wasserdispergierbarkeit des Bindemittels eingerührt.
In einem zweiten Schritt werden hiernach während 3 Stunden bei 80 Grad C 8,0 Teile Benzophenontetracarbonsäureanhydrid als copolymerisierbarer Photoinitiator eingerührt und mit den freien Hydroxylgruppen des Polyetheracrylats umgesetzt.
In einem abschließenden Schritt werden noch 2,0 Teile Dibutylamin zur Einstellung der Viskosität und der Reaktivität des Bindemittels während 1 Stunde bei 60 Grad C zugefügt.
Die Viskosität des solchermaßen hergestellten Bindemittels BM1 beträgt 27,6 dPas bei 40 Grad C.

Ein aus 100 Gew.-% des Bindemittels BM1 bestehendes Beschichtungsmittel härtet ohne weitere Zusätze unter UV-Strahlung aus, wobei unter einem 80W-Strahler bei einmaligem Durchlauf eine Bandgeschwindigkeit von 20 m/min realisiert werden kann.

### Beipiel 2: Herstellung eines weiteren Beschichtungsmittels basierend auf dem Bindemittel BM1

Aus 60,0 Teilen des Bindemittels BM1 gemäß Beispiel 1 und 40,0 Teilen eines handelsüblichen Polyetheracrylats (Laromer ^{R} PO 83F der Fa. BASF AG) wird ein weiteres Beschichtungsmittel hergestellt.
Das Beschichtungsmittel härtet ohne weitere Zusätze unter UV-Strahlung aus, wobei unter einem sow-Strahler bei einmaligem Durchlauf eine Bandgeschwindigkeit von 10 m/min realisiert werden kann.

## Patentansprüche

1. Strahlenhärtbares Bindemittel BM, bestehend aus einem Copolymerisat, aufgebaut aus:
| | |
|---|---|
| 80 bis 99 Gew.-%, | bevorzugt 85 bis 98 Gew.-%, bezogen auf das Bindemittel BM, eines hydroxylgruppenhaltigen Polyether(meth)acrylats und/oder Polyester(meth)acrylats als Komponente A) und aus |
| 1 bis 20 Gew.-%, | bevorzugt 2 bis 15 Gew.-%, bezogen auf das Bindemittel BM Benzophenontetracarbonsäure, deren Anhydride und/oder deren Ester als Komponente B), |
**dadurch gekennzeichnet, daß** die Komponente A) ein Addukt aus dem Polyether(meth)acrylat und/oder Polyester(meth)acrylat und aus einem Mono-, Di- und/oder Polyamin AA) ist.

2. Strahlenhärtbares Bindemittel BM nach Anspruch 1, **dadurch gekennzeichnet, daß** das hydroxylgruppenhaltige Polyether(meth)acrylat und/oder Polyester(meth)acrylat A) mindestens zwei Acrylsäureester- und/oder Methacrylsäureestergruppen pro Molekül enthält.

3. Strahlenhärtbares Bindemittel BM nach Anspruch 1 oder 2, **dadurch gekennzeichnet, daß** das Bindemittel BM als Komponente A) ausschließlich Polyether(meth)acrylat enthält.

4. Strahlenhärtbares Bindemittel BM nach einem der Ansprüche 1 bis 3, **dadurch gekennzeichnet, daß** das Polyether(meth)acrylat A) aus (Meth)acrylsäure und alkoxylierten Polyolen, die durch Umsetzung von zwei- oder mehrwertigen Alkoholen mit Ethylen- und/oder Propylenoxid erhalten werden, durch Veresterung hergestellt wird.

5. Strahlenhärtbares Bindemittel BM nach einem der Ansprüche 1 bis 4, **dadurch gekennzeichnet, daß** die Komponente AA) ein Diamin mit einer primären und einer tertiären Aminogruppe ist und daß das Verhältnis von primären Aminogruppen der Polyamine zu (meth)acrylischen Doppelbindungen des Polyetheracrylats A1) 0,01:1 bis 0,2:1, bevorzugt 0,03:1 bis 0,1:1, beträgt.

6. Strahlenhärtbares Bindemittel BM nach einem der Ansprüche 1 bis 5, **dadurch gekennzeichnet, daß** die Komponente AA) N,N-Dimethyl-1,3-diaminopropan ist.

7. Strahlenhärtbares Bindemittel BM nach einem der Ansprüche 1 bis 6, **dadurch gekennzeichnet, daß** als Komponente B) im Beschichtungsmittel BM das Dianhydrid der Benzophenontetracarbonsäure eingesetzt wird.

8. Verfahren zur Herstellung des strahlenhärtbaren Bindemittels BM nach einem der Ansprüche 1 bis 7, umfassend folgende Stufen:
I. die Umsetzung der Komponente A) mit dem Mono, Di- und/oder Polyamin AA),
II. die Umsetzung des gemäß Stufe I. hergestellten Additionsprodukts mit der Komponente B) durch Veresterung der Komponente B) mit den freien Hydroxylgruppen der Komponente A), gegebenenfalls unter Verwendung an sich üblicher Veresterungskatalysatoren, und gegebenenfalls
III. die abschließende Umsetzung des gemäß Stufe II. hergestellten Bindemittels mit weiterem Mono-, Di- und/oder Polyamin AA) als Komponente E) zur Einstellung der Reaktivität und Viskosität des Beschichtungsmittels.

9. Verfahren zur Herstellung des strahlenhärtbaren Bindemittels BM nach einem der Ansprüche 1 bis 7, umfassend folgende Stufen:
I. die Umsetzung der Komponente A) mit der Komponente B) durch Veresterung der Komponente B) mit den freien Hydroxylgruppen der Komponente A), gegebenenfalls unter Verwendung an sich üblicher Veresterungskatalysatoren, und
II. die abschließende Umsetzung des gemäß Stufe I. hergestellten Bindemittels mit dem Mono-, Di- und/oder Polyamin AA) als Komponente E) zur Adduktbildung und zur Einstellung der Reaktivität und Viskosität des Beschichtungsmittels.

10. Verwendung der strahlenhärtbaren Bindemittel BM nach einem der Ansprüche 1 bis 7 oder der nach einem Verfahren nach einem der Ansprüche 8 oder 9 erhaltenen strahlenhärtbaren Bindemittel BM in einem strahlenhärtbaren Beschichtungsmittel, **dadurch gekennzeichnet, daß** das Beschichtungsmittel aufgebaut ist aus:
| | |
|---|---|
| 20 bis 100 Gew.-%, | vorzugsweise 30 bis 80 Gew.-%, des Bindemittels BM nach einem der Ansprüche 1 bis 8, gegebenenfalls im Gemisch mit weiterem photopolymerisierbarem, polymerem Bindemittel, |
| 0 bis 40 Gew.-%, | vorzugsweise 0 bis 30 Gew.-%, Wasser als Komponente C), |
| 0 bis 50 Gew.-%, | vorzugsweise 0 bis 30 Gew.-% Füllstoffe als Komponente D), |
| 0 bis 10 Gew.-%, | vorzugsweise 0,5 bis 10 Gew.-%, weiteres Mono-, Di- und/oder Polyamin AA) als Komponente E), |
| 0 bis 20 Gew.-%, | vorzugsweise 0 bis 10 Gew.-%, niedermolekulare, copolymerisierbare Verbindungen als Komponente F), sowie |
| 0 bis 30 Gew.-%, | vorzugsweise 0 bis 20 Gew.-% übliche Hilfs- und Zusatzstoffe als Komponente G), |
wobei die Summe der Anteile des Bindemittels BM und der Komponenten C) bis G) 100 Gew.-% des Beschichtungsmittels ausmacht.

11. Verwendung nach Anspruch 10 zur Lackierung von Holz, Holzwerkstoffen, Glas, Papier und Kunststoffen.

## Claims

1. Radiation-curable binder BM consisting of a copolymer composed of:
| | |
|---|---|
| from 80 to 99 % by weight, | preferably from 85 to 98 % by weight, based on the binder BM, of a hydroxyl-containing polyether (meth)acrylate and/or polyester (meth)acrylate as component A) and of |
| from 1 to 20 % by weight, | preferably from 2 to 15 % by weight, based on the binder BM, of benzophenonetetracarboxylic acid, its anhydrides and/or its esters as component B), |
**characterized in that** component A) is an adduct of the polyether (meth)acrylate and/or polyester (meth)acrylate and of a mono-, di- and/or polyamine AA).

2. Radiation-curable binder BM according to claim 1, **characterized in that** the hydroxyl-containing polyether (meth)acrylate and/or polyester (meth)acrylate A) contains at least two acrylate and/or methacrylate groups per molecule.

3. Radiation-curable binder BM according to claim 1 or 2, **characterized in that** the binder BM contains as component A) exclusively polyether (meth)acrylate.

4. Radiation-curable binder BM according to one of claims 1 to 3, **characterized in that** the polyether (meth)acrylate A) is prepared by esterification from (meth)acrylic acid and alkoxylated polyols which are obtained by reacting di- or polyhydric alcohols with ethylene oxide and/or propylene oxide.

5. Radiation-curable binder BM according to one of claims 1 to 4, **characterized in that** component AA) is a diamine having one primary and one tertiary amino group and **in that** the ratio of primary amino groups of the polyamines to (meth)acrylic double bonds of the polyether acrylate A1) is from 0.01 : 1 to 0.2 : 1, preferably from 0.03 : 1 to 0.1 : 1.

6. Radiation-curable binder BM according to one of claims 1 to 5, **characterized in that** component AA) is N,N-dimethyl-1,3-diaminopropane.

7. Radiation-curable binder BM according to one of claims 1 to 6, **characterized in that** the dianhydride of benzophenonetetracarboxylic acid is employed as component B) in the binder BM.

8. Process for the preparation of the radiation-curable binder BM according to one of claims 1 to 7, comprising the following stages:
I. the reaction of component A) with the mono-, di- and/or polyamine AA),
II. the reaction of the addition product prepared in stage I. with component B) by esterifying component B) with the free hydroxyl groups of component A), with or without the use of esterification catalysts which are customary per se, and, if desired,
III. the concluding reaction of the binder prepared in state II. with further mono-, di- and/or polyamine AA) as component E) in order to adjust the reactivity and viscosity of the coating composition.

9. Process for the preparation of the radiation-cuarble binder BM according to one of claims 1 to 7, comprising the following stages:
I. the reaction of component A) with component B) by esterifying component B) with the free hydroxyl groups of component A), with or without the use of esterification catalysts which are customary per se, and
II. the concluding reaction of the binder prepared in state I. with the mono-, di- and/or polyamine AA) as component E) for adduct formation and for adjusting the reactivity and viscosity of the coating composition.

10. Use of the radiation-curable binders BM according to one of claims 1 to 7 or of the radiation-curable binders BM obtained by a process according to either of claims 8 or 9 in a radiation-curable coating composition, **characterized in that** the coating composition is composed of:
| | |
|---|---|
| from 20 to 100 % by weight, | preferably from 30 to 80 % by weight, of the binder BM according to one of claims 1 to 8, mixed if desired with further photopolymerizable, polymeric binder, |
| from 0 to 40 % by weight, | preferably from 0 to 30 % by weight, of water as component C), |
| from 0 to 50 % by weight, | preferably from 0 to 30 % by weight, of filler as component D), |
| from 0 to 10 % by weight, | preferably from 0.5 to 10 % by weight, of further mono-, di- and/or polyamine AA) as component E), |
| from 0 to 20 % by weight, | preferably from 0 to 10 % by weight, of low molecular mass, copolymerizable compounds as component F), and |
| from 0 to 30 % by weight, | preferably from 0 to 20 % by weight, of customary auxiliaries and additives as component G), |
the sum of the proportions of the binder BM and of component C) to G) making up 100 % by weight of the coating composition.

11. Use according to claim 10 for coating wood, wooden materials, glass, paper and plastics.

## Revendications

1. Liant L durcissable par irradiation, consistant en un copolymère constitué de :
| | |
|---|---|
| 80 à 99 % en poids, | de préférence 85 à 98 % en poids, par rapport au liant L, d'un polyéther(méth)acrylate et/ou polyester(méth)acrylate contenant des groupes hydroxy, en tant que composant A) et de |
| 1 à 20 % en poids, | de préférence 2 à 15 % en poids, par rapport au liant L, d'acide benzophénonetétracarboxylique, ses anhydrides et/ou ses esters, en tant que composant B), |
**caractérisé en ce que** le composant A) est un adduit du polyéther(méth)acrylate et/ou polyester(méth)acrylate et d'une mono-, di- et/ou polyamine AA).

2. Liant L durcissable par irradiation selon la revendication 1, **caractérisé en ce que** le polyéther-(méth)acrylate et/ou polyester(méth)acrylate A) contenant des groupes hydroxy contient au moins deux groupes ester d'acide acrylique et/ou ester d'acide méthacrylique par molécule.

3. Liant L durcissable par irradiation selon la revendication 1 ou 2, **caractérisé en ce que** le liant L contient en tant que composant A) exclusivement un polyéther(méth)acrylate.

4. Liant L durcissable par irradiation selon l'une quelconque des revendications 1 à 3, **caractérisé en ce que** le polyéther(méth)acrylate A) est préparé par estérification à partir d'acide (méth)acrylique et de polyols alcoxylés qui sont obtenus par réaction d'alcools mono- ou polyhydroxylés avec l'oxyde d'éthylène et/ou l'oxyde de propylène.

5. Liant L durcissable par irradiation selon l'une quelconque des revendications 1 à 4, **caractérisé en ce que** le composant AA) est une diamine comportant un groupe amino primaire et un groupe amino tertiaire et **en ce que** le rapport des groupes amino primaires des polyamines aux doubles liaisons (méth)acryliques du polyétheracrylate A1) va de 0,01:1 à 0,2:1, de préférence de 0,03:1 à 0,1:1.

6. Liant L durcissable par irradiation selon l'une quelconque des revendications 1 à 5, **caractérisé en ce que** le composant AA) est le N,N-diméthyl-1,3-diaminopropane.

7. Liant L durcissable par irradiation selon l'une quelconque des revendications 1 à 6, **caractérisé en ce qu'**on utilise en tant que composant B) dans le liant L le dianhydride de l'acide benzophénonetétracarboxylique.

8. Procédé pour la préparation du liant L durcissable par irradiation selon l'une quelconque des revendications 1 à 7, comprenant les étapes suivantes :
I. la réaction du composant A) avec la mono-, di-et/ou polyamine AA),
II. la réaction du produit d'addition préparé selon l'étape I. avec le composant B) par estérification du composant B) par les groupes hydroxy libres du composant A), éventuellement avec utilisation de catalyseurs d'estérification usuels en soi, et éventuellement
III. la réaction finale du liant préparé selon l'étape II. avec une autre mono-, di- et/ou polyamine AA) en tant que composant E) pour l'ajustement de la réactivité et de la viscosité du produit de revêtement.

9. Procédé pour la préparation du liant L durcissable par irradiation selon l'une quelconque des revendications 1 à 7, comprenant les étapes suivantes :
I. la réaction du composant A) avec le composant B) par estérification du composant B) par les groupes hydroxy libres du composant A), éventuellement avec utilisation de catalyseurs d'estérification usuels en soi, et
II. la réaction finale du liant préparé selon l'étape I. avec la mono-, di- et/ou polyamine AA) en tant que composant E) pour la formation d'adduit et pour l'ajustement de la réactivité et de la viscosité du produit de revêtement.

10. Utilisation des liants L durcissables par irradiation selon l'une quelconque des revendications 1 à 7 ou des liants L durcissables par irradiation obtenus conformément à un procédé selon l'une quelconque des revendications 8 et 9, dans un produit de revêtement durcissable par irradiation, **caractérisée en ce que** le produit de revêtement est constitué de
| | |
|---|---|
| 20 à 100 % en poids, | de préférence 30 à 80 % en poids, du liant L selon l'un quelconque des revendications 1 à 8, éventuellement en mélange avec un autre liant polymère photopolymérisable, |
| 0 à 40 % en poids, | de préférence 0 à 30 % en poids, d'eau en tant que composant C), |
| 0 à 50 % en poids, | de préférence 0 à 30 % en poids, de charges en tant que composant D), |
| 0 à 10 % en poids, | de préférence 0,5 à 10 % en poids, d'une autre mono-, di- et/ou |
| | polyamine AA) en tant que composant E), |
| 0 à 20 % en poids, | de préférence 0 à 10 % en poids, de composés copolymérisables de faible masse moléculaire en tant que composant F), |
| ainsi que 0 à 30 % en poids, | de préférence 0 à 20 % en poids d'additifs et adjuvants usuels en tant que composant G), |
la somme des quantités du liant L et des composants C) à G) représentant 100 % en poids du produit de revêtement.

11. Utilisation selon la revendication 10 pour le peinturage du bois, de matériaux à base de bois, du verre, du papier et de matières plastiques.
